(19)

Europäisches
Patentamt

European
Patent Office

Office européen
des brevets

(11) **EP 3 435 481 A1**

(12) **EUROPEAN PATENT APPLICATION**

(43) Date of publication:
30.01.2019 Bulletin 2019/05

(51) Int Cl.:
*H01Q 15/00* (2006.01)      *H01P 1/201* (2006.01)

(21) Application number: 17183403.9

(22) Date of filing: 26.07.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Nokia Technologies Oy
02610 Espoo (FI)

(72) Inventors:
• BULJA, Senad
  Dublin 15 (IE)

• TEMPL, Wolfgang
  70345 Stuttgart (DE)
• FASANO KOPF, Rose
  Murray Hill, NJ 07974-0636 (US)
• PIVIT, Florian
  Dublin 15 (IE)

(74) Representative: DREISS Patentanwälte PartG
mbB
Friedrichstraße 6
70174 Stuttgart (DE)

(54) **COMPOSITE SUBSTRATE FOR RADIO FREQUENCY SIGNALS AND METHOD OF MANUFACTURING A COMPOSITE SUBSTRATE**

(57)     Composite substrate (1300; CS) for radio frequency, RF, signals comprising at least a first layer (1310; 1310a) of dielectric material and a second layer (1320; 1320a) of dielectric material, and at least one conductor layer (1330; 1330a) of an electrically conductive material arranged between said first layer (1310; 1310a) and said second layer (1320; 1320a), wherein said first layer (1310; 1310a) and said second layer (1320; 1320a) and said conductor layer (1330; 1330a) each comprise optically transparent material.

**Fig. 2**

EP 3 435 481 A1

**Description**

**Field of the invention**

The disclosure relates to a composite substrate for radio frequency (RF) signals. The disclosure further relates to a method of manufacturing a composite substrate for RF signals.

**Background**

Conventional substrate materials for RF signals, e.g. for constructing RF waveguides or resonators or the like are usually offered by their manufacturers in a standard set of dielectric properties, e.g. with values for the relative permittivity ($\varepsilon_r$) from 2-10, and thus inherently limit the potential applications. Further, conventional substrate materials are usually not transparent.

**Summary**

As such, there is a strong need for improved substrates for RF signals which do not suffer from the above shortcomings.

Various embodiments provide a composite substrate for radio frequency, RF, signals, wherein said composite substrate comprises at least a first layer of dielectric material and a second layer of dielectric material, and at least one conductor layer of an electrically conductive material arranged between said first layer and said second layer, wherein said first layer and said second layer and said conductor layer each comprise optically transparent material. This advantageously enables to provide RF substrates with comparatively large dielectric permittivity, which may be precisely controlled by appropriately choosing geometric properties (for example thickness) of the different layers and their material properties (for example permittivity or conductivity). Moreover, the principle according to the embodiments enables to provide RF substrates which are transparent, i.e. enable transmission of light at least in certain wavelength ranges.

According to further embodiments, said at least one conductor layer comprises indium tin oxide, ITO. As an example, according to an embodiment, ITO structures may be used for forming said at least one conductor layer which comprise a conductivity of about $1.38 \times 10^5$ S / m (Siemens per meter). According to further embodiments, other transparent conductors with different electric conductivities (higher or lower) may be used.

According to further embodiments, said first layer of dielectric material and/or said second layer of dielectric material comprises a ceramic material, e.g. a transparent ceramic material. As an example, according to an embodiment, a transparent ceramic material may be used which comprises a (relative) dielectric permittivity of up to about 40.

According to further embodiments, a ratio of an aggregated layer thickness of said first layer and said second layer with respect to a thickness of said conductor layer ranges from about 1:10 (i.e., 0.1) to about 1:100 (i.e., 0.01), wherein said ratio is preferably about 1:50. This way, comparatively large (relative) dielectric permittivity values may be obtained for the composite substrate, e.g. values of greater than about 1000 and more. The aggregated layer thickness of said first layer and said second layer may e.g. be obtained as the sum of the individual layer thicknesses of said first layer and said second layer, and said ratio may be obtained by dividing said aggregated layer thickness by the thickness of said conductor layer.

According to further embodiments, a layer thickness of said first layer and/or said second layer is in a range between about 1 nm (nanometer) to about 200 nm.

According to further embodiments, a layer thickness of said conductor layer is in a range between about 200 nm to about 4000 nm, preferably between about 800 nm to about 1200 nm. Further embodiments provide a filter for RF signals, comprising a first coupling layer, a second coupling layer, and at least one resonator layer arranged between said first coupling layer and said second coupling layer, wherein said resonator layer comprises at least one transparent composite substrate according to the embodiments. Further, said first coupling layer and said second coupling layer each comprise optically transparent material, so that a filter for RF signals is obtained which at the same time is transparent in the optical domain.

According to some embodiments, said optically transparent material of said first coupling layer and said second coupling layer is substantially transparent for a visible wavelength range, wherein particularly said visible wavelength range extends between about 390 nm and about 700 nm. According to further embodiments, this range of optical transparency may also apply to the composite substrate. Thus, advantageously, RF signal filters may be provided which are transparent and which may thus e.g. be used together with (e.g., integrated in) other transparent structures such as windows of buildings or vehicles or the like without substantially affecting the transparent properties of said other transparent structures.

According to some embodiments, n many further resonator layers are provided, wherein *n* is a positive integer, wherein adjacent to each of said further resonator layers an associated further coupling layer is provided. As an example,

by using $n_1=4$ many resonator layers, a filter having four poles may be provided. According to some embodiments, at least one conductor layer of said further resonator layer(s) comprises ITO-based material.

According to some embodiments, at least one of said first coupling layer and said second coupling layer comprises a transparent dielectric material, for example glass. According to some embodiments, if further coupling layers (e.g., associated with further resonator layers) are provided, one or more of said further coupling layers may also comprise such transparent dielectric material.

According to some embodiments, said filter is a bandpass filter, wherein preferably a center frequency of said bandpass filter is about 60.5 GHz, and wherein further preferably a bandwidth of said filter is about 7 GHz, thus advantageously covering an unlicensed frequency band around 60.5 GHz.

According to some embodiments, at least one of said first coupling layer and said second coupling layer (or at least one further coupling layer in the case of at least one further resonator layer) is configured as a quarter-wavelength transformer for said RF signals, e.g., forming an impedance transformer or admittance transformer, respectively, with an electric length of 90° (degrees) or a quarter wavelength. As an example, optically transparent (e.g., in the visible wavelength range) bandpass filters for RF signals (e.g. in the mm-wave range) with a desired center frequency and bandwidth may be provided using the abovementioned embodiments.

According to some embodiments, a (relative) dielectric permittivity, $\varepsilon\_res$ of said at least one resonator layer is chosen depending on the equation $\varepsilon\_res = \varepsilon\_it / K^2$, wherein $\varepsilon\_it$ is a (relative) dielectric permittivity of a coupling layer adjacent to said resonator layer, and wherein K is a coupling coefficient.

Further embodiments feature a structure, particularly a building or a vehicle, e.g. an air vehicle and/or land vehicle and/or water craft, comprising at least one filter according to the embodiments. As an example, one or more windows / windshields and the like of such structures and/or vehicles may be provided with at least one filter according to the embodiments, whereby transparency of said windows is not affected, but filtering of RF signals in specific frequency ranges is enabled.

Further embodiments provide a method of manufacturing a composite substrate for RF signals, wherein said method comprises the following steps: providing a first layer of dielectric material, providing a second layer of dielectric material, and providing at least one conductor layer of an electrically conductive material between said first layer and said second layer, wherein said first layer and said second layer and said conductor layer each comprise optically transparent material.

It is to be noted that the sequence of method steps does not necessarily correspond to the aforementioned sequence. As an example, at first, a first dielectric layer may be provided, and subsequently, said conductor layer may be provided on top of said first dielectric layer, and subsequently, a second dielectric layer may be provided on top of said conductor layer. Other sequences are also possible according to further embodiments. Preferably, the layers are arranged directly adjacent to each other, i.e. without any other (third) medium in between them.

According to some embodiments, as an example, the following manufacturing methods and techniques may be used to provide the composite substrate and/or the filter: Dielectric and/or metal layers may be deposited and patterned using standard semiconductor processing techniques. Deposition can be performed using techniques such as, but not limited to: chemical vapor deposition, e-beam evaporation, sputter deposition, electro-plating, etc. Layers may be patterned using lithographically techniques then plasma or wet etched, or deposition and lift-off, etc. Preferably, standard manufacturing techniques (not limited to semiconductor manufacturing techniques) may be used to provide the composite substrate and/or the filter according to some embodiments.

Further advantageous embodiments are provided by the dependent claims.

**Brief description of the figures**

Further features, aspects and advantages of the illustrative embodiments are given in the following detailed description with reference to the drawings in which:

Figure 1     schematically depicts a perspective view of a composite substrate according to an embodiment,

Figure 2     schematically depicts a composite substrate according to a further embodiment,

Figure 3     schematically depicts a perspective view of a filter for RF signals according to an embodiment,

Figure 4     schematically depicts a basic configuration of a bandpass filter according to an embodiment,

Figure 5     schematically depicts a structure comprising dielectric layers according to an embodiment,

Figure 6     schematically depicts a dielectric permittivity over frequency according to an embodiment,

Figure 7        schematically depicts a loss tangent over frequency according to an embodiment,

Figure 8A       schematically depicts an n-pole filter according to an embodiment,

Figure 8B       schematically depicts a 3-pole filter according to an embodiment,

Figure 9        schematically depicts a perspective view of a 3-pole filter according to an embodiment,

Figure 10       schematically depicts a land vehicle according to an embodiment, and

Figure 11       schematically depicts a simplified flow-chart of a method according to an embodiment.

**Description of the embodiments**

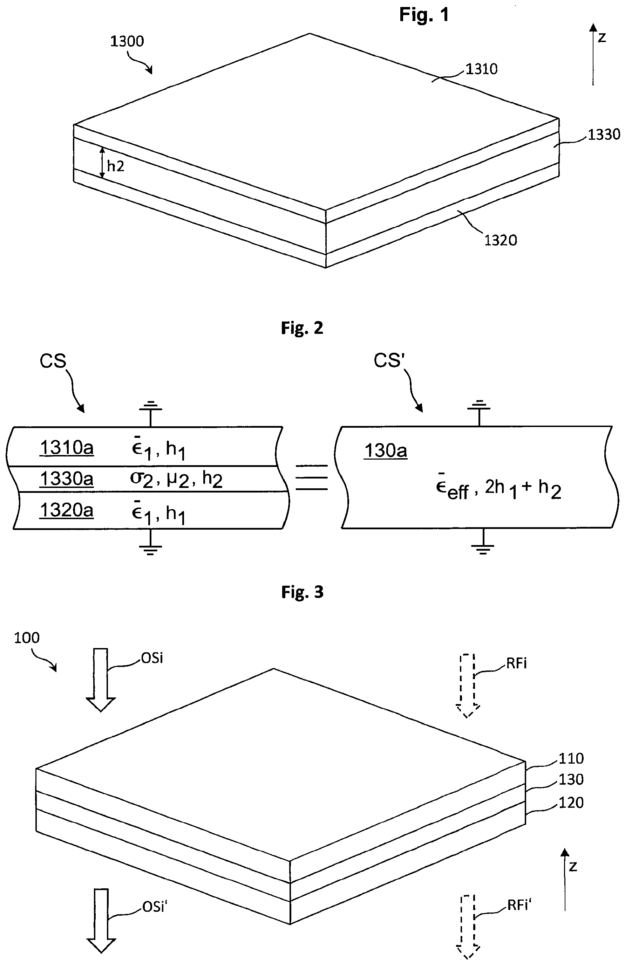

Figure 1 schematically depicts a perspective view of a composite substrate 1300 according to an embodiment. The composite substrate 1300 comprises a first layer 1310 of dielectric material and a second layer 1320 of dielectric material. The composite substrate 1300 further comprises at least one conductor layer 1330 of an electrically conductive material arranged between said first layer 1310 and said second layer 1320, wherein said first layer 1310 and said second layer 1320 and said conductor layer 1330 each comprise optically transparent material. As a consequence, the composite substrate 1300 is transparent for optical signals, preferably within the visible wavelength range between about 390 nm and about 700 nm. Thus, by using the composite substrate 1300, optically transparent substrate structures may be provided for forming RF resonators and/or RF waveguides and the like.

In other embodiments, more than said two layers 1310, 1320 of dielectric material and/or said one conductor layer 1330 are possible.

According to Applicant's analysis, the stacked layer configuration of the composite substrate 1300 also advantageously enables to provide RF substrates with comparatively large (relative) dielectric permittivity values, which may be precisely controlled by appropriately choosing geometric properties of the different layers and their material properties.

According to further embodiments, said at least one conductor layer 1330 comprises indium tin oxide, ITO. As an example, according to an embodiment, ITO structures may be used for forming said at least one conductor layer 1330 which comprise a conductivity of about $1.38 \times 10^5$ S / m (Siemens per meter). According to further embodiments, other transparent conductors with different electric conductivities (higher or lower than that of ITO) may be used.

According to further embodiments, said first layer 1310 of dielectric material and/or said second layer 1320 of dielectric material comprises a ceramic material, e.g. a transparent ceramic material. As an example, according to an embodiment, a transparent ceramic material may be used which comprises a (relative) dielectric permittivity of up to about 40.

According to further embodiments, a ratio of an aggregated layer thickness of said first layer 1310 and said second layer 1320 with respect to a thickness h2 (measured along the z axis of Fig. 1) of said conductor layer 1330 ranges from about 1:10 (i.e., 0.1) to about 1:100 (i.e., 0.01), wherein said ratio is preferably about 1:50. This way, comparatively large (relative) dielectric permittivity values may be obtained for the composite substrate 1300, e.g. values of greater than about 1000 and more. The aggregated layer thickness of said first layer 1310 and said second layer 1320 may e.g. be obtained as the sum of the individual layer thicknesses (not depicted in Fig. 1, but also measured along z axis in analogy to the layer thickness h2 of the conductive layer 1330) of said first layer 1310 and said second layer 1320, and said ratio may be obtained by dividing said aggregated layer thickness by the thickness h2 of said conductor layer 1330.

According to further exemplary embodiments, a layer thickness of said first layer 1310 and/or said second layer 1320 is in a range between about 1 nm to about 200 nm respectively.

According to further exemplary embodiments, a layer thickness h2 of said conductor layer 1330 is in a range between about 400 nm to about 4000 nm, preferably between about 800 nm to about 1200 nm.

One exemplary field of application of the composite substrate 1300 is the field of RF signal communications, particularly mm-wave communications. Even though theoretically offering an unprecedented amount of data transmission, mm-wave communications are inherently short range in nature due to the wavelengths of e.g. tens of GHz (gigahertz) and their related quasi-optical propagation properties. This is particularly true for the licence-free frequency band in the 57-64 GHz. Here, electromagnetic (EM) waves not only greatly suffer from oxygen absorption, which peaks at 60 GHz, but also from obstacle refraction (such as windows). This is particularly true for the cases of indoor mm-wave signal reception from signals which have been generated at outdoor in wireless fixed access scenarios. In this case, the outdoor mm-wave signal is primarily reflected off the glass interface due to the differences in the dielectric permittivities of the involved transmission media (free air, window material such as glass, and the like). For these settings, advantageously, the composite substrate 1300 according to the embodiments may be used to provide resonators and/or waveguide structures that operate within the mm-wave range from the RF signal point of view, which in addition are optically transparent.

As a further example, the composite substrate 1300 according to the embodiments may be used to enable penetration of RF mm-wave signals through a glass interface without substantially impairing (apart from a minimal signal attenuation) the visual characteristics that windows are intended to serve. In other words, according to some exemplary embodiments, the composite substrate 1300 according to the embodiments may e.g. be used to construct a visually transparent impedance matching network that enables RF signals e.g. within the mm-wave range to be coupled from free air into glass and vice versa. Additionally, by appropriately combining several material layers with at least one composite substrate 1300 according to the embodiments, an RF signal filter may be implemented, which is transparent for optical signals, too.

Figure 2 schematically depicts a side view of a composite substrate CS according to a further embodiment. The composite substrate CS comprises two dielectric layers 1310a, 1320a similar to the layers 1310, 1320 of the substrate 1300 explained above with reference to Fig. 1. The composite substrate CS of Fig. 2 also comprises a conductor layer 1330a arranged between said two dielectric layers 1310a, 1320a. The first and second dielectric layers 1310a, 1320a each comprise a first dielectric permittivity $\bar{\varepsilon}_1$ and a first layer thickness $h_1$ (vertical in Fig. 2), and the conductor layer 1330a comprises a second dielectric permittivity $\bar{\varepsilon}_2$ and a second layer thickness h2, as well as a non-vanishing electric conductivity $\sigma_2$.

An equivalent dielectric substrate CS', which corresponds regarding its macroscopic permittivity with the composite substrate CS of Fig. 2 is depicted on the right side of the same figure. The equivalent dielectric substrate CS' is characterized by a single layer 130a of material having a layer thickness of $2 * h_1 + h_2$ and a resulting, effective permittivity $\bar{\varepsilon}_{eff}$.

According to an embodiment, the composite macroscopic value of the dielectric constant of the stack CS, CS' formed in the way presented in Fig. 2 can be expressed as

$$\bar{\varepsilon}_{eff} = \bar{\varepsilon}_1 \left[ 1 - \frac{\gamma_m}{h_1 \varepsilon_{r2} k_0^2} \tanh(\gamma_m h_2) \right]$$

(equation 1),

wherein $\varepsilon_{r2} = 1 - j \dfrac{\sigma_2}{\omega \varepsilon_0}$ ($\varepsilon_0$ being the dielectric permittivity of vacuum) and $k_0$ is the propagation constant in free space, $k_0 = \dfrac{\omega}{c}$, with c being the velocity of light in free space and $\omega$ denotes an angular frequency of a signal (with

$\omega = 2\pi f$, wherein f is the signal frequency). The expression $\gamma_m = (1+j)\sqrt{\dfrac{\omega \mu \sigma}{2}} = (1+j)\dfrac{1}{\delta}$ represents the

propagation constant in conductors, where $\delta = \sqrt{\dfrac{2}{\omega \mu \sigma}}$ represents the skin depth.

From equation (1) it can be seen that the dielectric constant of a composite structure CS of Fig. 2 can be increased by increasing the ratio of the volume occupied by the conductor and the dielectric (or by increasing their respective heights).

Let us assume that, according to an embodiment, the base layer 1320a of Fig. 2 is a ceramic and that it has a comparatively high value of dielectric permittivity, $\bar{\varepsilon 1}$ close to 40. Its loss tangent is rather small and e.g. equal to about $\tan(\delta_3) = 5 \times 10^{-5}$. In order for this composite structure CS to be usable for a preferred embodiment of EM coupling, e.g. coupling of RF resonators to construct a filter such as a bandpass filter, it would be beneficial if the composite structure CS would comprise a relative dielectric permittivity greater than e.g. 1000, as will be shown below, cf. equation (7) and the related description. For the ceramic dielectric of layer 1320a of Fig. 2 with $\bar{\varepsilon}_{r1} = 40$ and $\tan(\delta_3) = 5 \times 10^{-5}$, according to an embodiment, this may be achieved if the ratio of the volumes occupied by the dielectric 1310a, 1320a and conductor 1330a are in proportion of about 1:50. In other words, as an example, the dielectric 1310a, 1320a may occupy a volume that is 50 times smaller than the volume area or volume of the conductor 1330a. According to a further embodiment, in order to minimize the composite losses of the composite dielectric CS formed in this way and to maintain optical transparency, the conductor layer 1330a may comprise a comparatively low conductivity - typical ITO structures with a

$$\sigma_{ITO} = 1.38 \text{x} 10^5 \frac{S}{m}$$

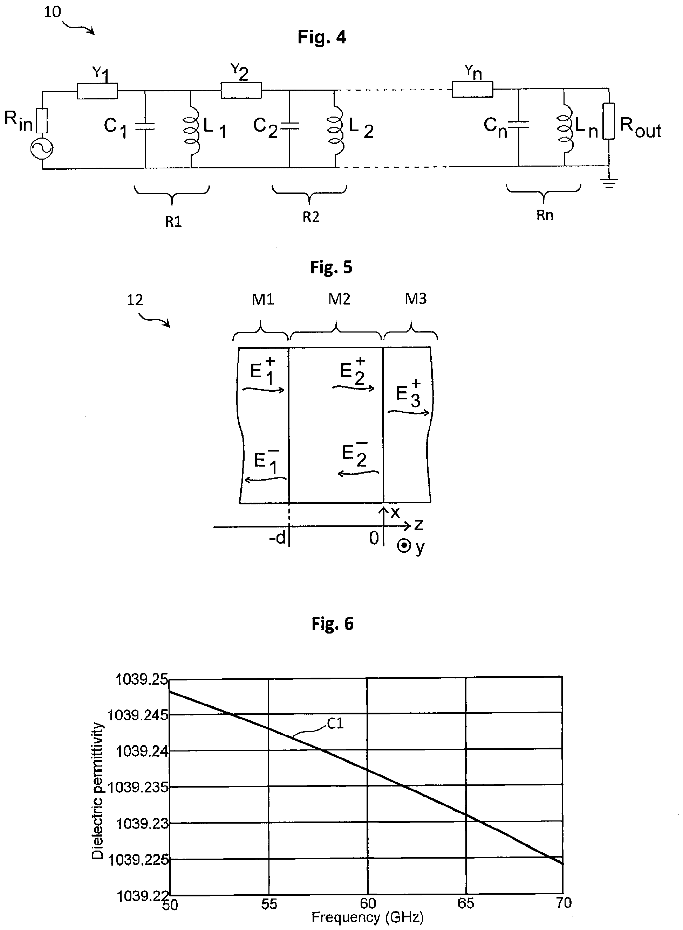

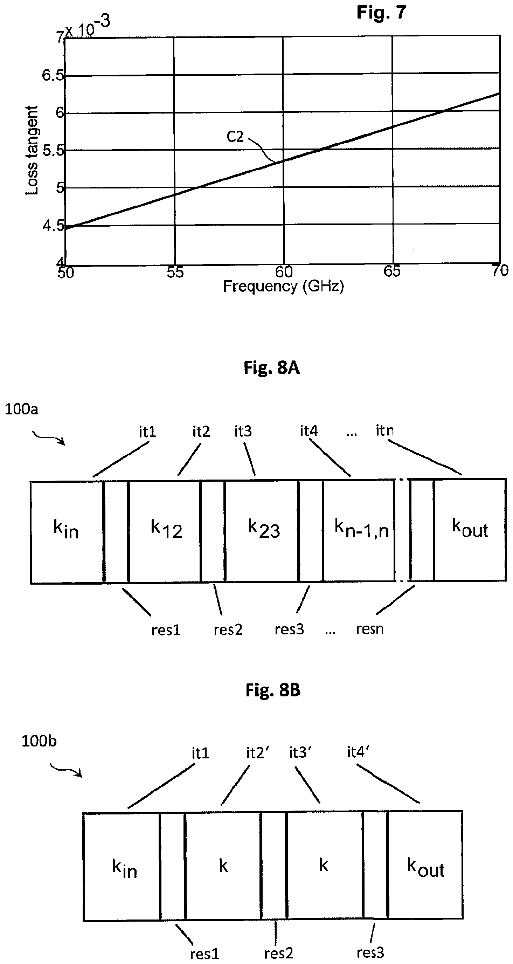

conductivity of , e.g., would suffice. The dielectric permittivity and its corresponding loss tangent of the stack formed in this way are shown in Fig. 6 and 7, cf. curves C1, C2. For the present example, it is assumed that the dielectric layers 1310a, 1320a are 20 nm thick (layer thickness $h_1$) respectively, while the conductor layer 1330a is 1000 nm thick (layer thickness $h_2$).

These figures demonstrate that, according to some embodiments, high values of dielectric permittivity are obtainable using transparent conductors 1330a and "thin" and preferably transparent ceramics 1310a, 1320a. The composite loss tangent of this material stack CS (Fig. 2) is somewhat increased, but not very greatly - at 60 GHz it stands at $\tan(\delta_{eff}) = 5 \text{x} 10^{-3}$, which is well usable for the realization of coupling coefficients required for filter construction. The value of 0.62 for the coupling coefficient of the composite substrate CS in Fig. 2, as given by equation (7) explained further below, when $\varepsilon_{r2} = 4$ (glass) and $\varepsilon_{r3} = 1039$ (dielectric constant for an adjacent material layer) complies with the requirements of RF filter designs.

According to further embodiments, different values for the dielectric permittivity of the optically transparent composite substrate CS (Fig. 2) may be obtained, depending on the layer thicknesses $h_1$, $h_2$ and their respective individual permittivities.

Figure 3 schematically depicts a perspective view of a filter 100 for RF signals RFi according to an embodiment. The filter 100 comprises a first coupling layer 110, a second coupling layer 120, and at least one resonator layer 130 arranged between (and preferably directly adjacent to) said first coupling layer 110 and said second coupling layer 120, wherein said resonator layer 130 comprises at least one composite substrate 1300 (Fig. 1) or CS (Fig. 2) according to the embodiments. Additionally, said first coupling layer 110 and said second coupling layer 120 each also comprise optically transparent material (e.g., material transparent in the visible wavelength range), so that the complete stack representing the filter 100 is transparent for optical signals OSi. In other words, an optical signal OSi incident upon a top surface, cf. Fig. 3, may travel through said filter 100, so that a slightly attenuated optical signal OSi' leaves the filter 100 at an opposing bottom surface.

According to some embodiments, said optically transparent material of said first coupling layer 110 and said second coupling layer 120 is substantially transparent for a visible wavelength range, wherein particularly said visible wavelength range extends between about 390 nm and about 700 nm.

However, for an incident RF signal RFi, e.g. in the mm-wave range (e.g., around 60 GHz), the filter 100 may comprise a non-constant transfer function, e.g. for implementing a bandpass filter, so that at an "output" (bottom surface of Fig. 3) of the filter 100 a filtered RF signal RFi' is obtained. According to some embodiments, the filter transfer function is defined by appropriately selecting geometry parameters as well as the permittivity of the involved material layers. Also, instead of a single resonator layer 130, several (e.g., n many) resonator layers (not shown in Fig. 3) may be provided, e.g. for constructing an n-pole bandpass filter.

Figure 4 schematically depicts a basic configuration 10 of a bandpass filter according to an embodiment. In this embodiment, elements Y1, Y2 and Yn are admittance transformers (or impedance transformers, respectively) through which individual resonators R1, R2, Rn, depicted by a parallel connection of a capacitor C1 and inductor L1, C2, L2, Cn, Ln, couple to each other. In this respect, the transformers Y1, Y2, Yn may also be considered as couplers. Further resonators and respective couplers may also be provided, cf. the dashed lines between resonators R2, Rn.

At a frequency of operation, the admittance transformers Y1, Y2, Yn may preferably be 90° long, e.g. have an electric length corresponding with 90 degrees or a quarter wavelength, thus operating as quarter-wavelength impedance transformers, where their characteristic admittance value determines an amount coupling between any two consecutive resonators. In view of this statement, a filter 100 (Fig. 3) according to the embodiments, realised in an optically transparent form, may in principle e.g. correspond to the equivalent circuit of Fig. 4. As an example, the resonators R1, R2, .., Rn may be formed by one or more composite substrates 1300 according to the embodiments, and the transformers Y1, Y2, Yn may e.g. be formed by dielectric layers (cf. e.g. layers 110, 120 of Fig. 3) of appropriate permittivity and thickness.

For further explanation, in the following, the structure 12 of Fig. 5 is considered, which depicts a cross-section of three different dielectric media, labelled as M1, M2 and M3. Here, our interest is to examine how much coupling is achieved from medium M1 to medium M3 through medium M2 and what condition should be satisfied for this coupling to be able to be used in the design of e.g. band-pass filters.

The starting point for the following examination is the Helmholtz equation in source-free media, i.e.

$$\nabla^2 E + k^2 E = 0 \ \text{for} \ k = \omega^2 \mu \varepsilon \qquad \text{(equation 2)}.$$

For planar waves without a guided component, it can be shown that the solution of this equation for the three different media M1, M2, M3 can be expressed as:

$$E_1(z) = E_1^+ e^{-jk_1 z} + E_1^- e^{jk_1 z}$$
$$E_2(z) = E_2^+ e^{-jk_2 z} + E_2^- e^{jk_2 z}$$
$$E_3(z) = E_3^+ e^{-jk_3 z} \qquad \text{(equation 3)},$$

wherein k1, k2, k3 are respective constants associated with the media M1, M2, M3.

It is assumed that the direction of the fields of equation 3 is in the x direction, perpendicular to the z axis, as indicated in figure 5. The y axis is orthogonal to the drawing plane of figure 5.

The corresponding H field is found from Maxwell's first cur1 equation, $\nabla x E = -j\omega\mu H$, to yield:

$$H_1(z) = Y_1 E_1^+ e^{-jk_1 z} - Y_1 E_1^- e^{jk_1 z}$$
$$H_2(z) = Y_2 E_2^+ e^{-jk_2 z} - Y_2 \Gamma_L E_2^- e^{jk_2 z} \qquad \text{(equation 4)},$$
$$H_3(z) = Y_3 E_3^+ e^{-jk_3 z}$$

where, $\Gamma_L = \dfrac{Y_2 - Y_3}{Y_2 + Y_3} = \dfrac{E_2^-}{E_2^+}$ and $Y_1 = \dfrac{k_1}{j\omega\mu_1}$, $Y_2 = \dfrac{k_2}{j\omega\mu_2}$ and $Y_3 = \dfrac{k_3}{j\omega\mu_3}$ represent intrinsic, characteristic impedances. The direction of the H fields in equation 4 is in the y direction, i.e. it is directed towards the viewer.

A coupling coefficient is, in general, defined as the ratio of current densities. Since the magnetic field strength, H, is in effect given by current intensity per unit length, we can define the coupling coefficient (the amount of energy passed on to dielectric medium M3 from medium M1) of Fig. 5 as

$$K = \frac{H_3(0)}{H_1(-d)} \qquad \text{(equation 5)}.$$

According to some embodiments, solving equations 3 and 4 with appropriate boundary conditions, the coupling coefficient K obtained by equation 5 becomes

$$K = j\frac{Y_2}{Y_3} = j\sqrt{\frac{\varepsilon_{r2}\mu_{r3}}{\varepsilon_{r3}\mu_{r2}}} \qquad \text{(equation 6)}.$$

Since for the vast majority of dielectrics, $\mu_r = 1$, equation 6 simplifies to

$$K = j\frac{Y_2}{Y_3} = j\sqrt{\frac{\varepsilon_{r2}}{\varepsilon_{r3}}} \quad \text{(equation 7)}.$$

In other words, according to some embodiments, the coupling between the two dielectric media M1, M3 is proportional to the ratio of the dielectric permittivity of the separating medium M2 and the dielectric permittivity of the receiving medium M3.

According to preferred embodiments, for making the findings given by equation 7 particularly useful in filter design, the coupling coefficient K given by equation 7 may exemplarily be selected to be in the range between 0.01 to 0.1.

As an example, if it is assumed that the coupling between medium M1 and medium M3 occurs through glass (medium M2) with a dielectric permittivity of $\varepsilon_{r2} = 4$, coupling coefficients of 0.05 to 0.1 are achieved when the dielectric constant of medium M3 is 1600 and 400. Such comparatively high values of relative dielectric constants are impossible to obtain using conventional standard ceramics of prior art, which typically have values up to 200 at most. Furthermore, in addition to the requirement for a high dielectric constant, such a dielectric needs also to be transparent. This appears to be an unsurmountable task using conventional dielectrics.

However, high values of the dielectric constant can be obtained in an "artificial" way, such as proposed by the principle of the embodiments, cf. the composite substrate 1300 of Fig. 1 above.

According to some embodiments, the dielectric media M1 and M3 of Fig. 5 may be made using a stacked dielectric approach (conductor 1330 interlaced with dielectric 1310, 1320), in accordance with Fig. 1, in order to achieve high values of dielectric constants desirable e.g. for the correct amount of coupling for some filter configurations. In order to maintain transparency, transparent ceramics and conductors are used for interlacing, as explained above, and to achieve a high value of the dielectric permittivity.

According to an embodiment, the dielectric medium M2 is assumed to be ordinary glass, with a relative dielectric permittivity of 4. Of course, for other embodiments, other dielectric media can be used for this purpose, but that would, of course, result in changes of the relative dielectric permittivity for media M1 and M3 in some applications.

As a further embodiment, an n-pole filter 100a designed using the principle according to the embodiments as explained above is shown on Fig. 8A. The filter 100a comprises n many resonators res1, res2, res3, resn, coupled by impedance transformers it2, it3, it4, .... Further impedance transformers it1, itn enable to couple an RF signal into the filter 100a (at the left side in Fig. 8A) and out of the filter 100a at the right side in Fig. 8A. According to preferred embodiments, the resonators res1, .., resn may comprise a composite substrate 1300 (Fig. 1) according to the embodiments explained above, possibly with different geometry each. According to a further embodiment, the impedance transformers it1, .., itn may comprise one or more dielectric layers each.

In the following, a filter 100b according to a further embodiment is depicted by Fig. 8B. Exemplarily, a 3-pole filter 100b is depicted operating at a centre frequency of 60.5 GHz with a bandwidth of 7 GHz (covering the licence free band). The filter 100b in question is 3-pole with a minimum attenuation at 50 GHz and 70 GHz of 25 dB. Its coupling matrix is

$$M = \begin{pmatrix} 0 & 0.10495 & 0 \\ 0.10495 & 0 & 0.10495 \\ 0 & 0.10495 & 0 \end{pmatrix}$$

with input and output couplings of $k_{in} = k_{out} = 0.11256$. More specifically, Fig. 8B schematically depicts a cross-section of one possible physical realisation of the filter 100b using the principle according to the embodiments.

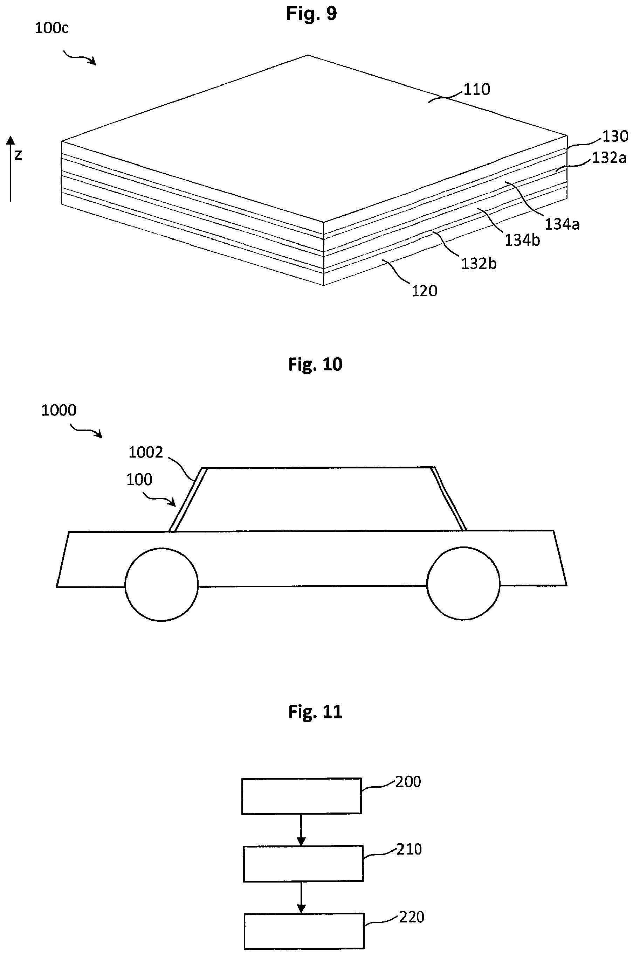

The filter 100b comprises admittance transformers it1, it2', it3', it4', which may be 90° long at the frequency of operation. In other words, the admittance transformers it1, it2', it3', it4' are configured as quarter-wavelength transformers. As an example, for the admittance transformers it1, it2', it3', it4', glass layers are used, with $\varepsilon_{r2} = 4$, , so that a length of the transformers (layer thickness along a horizontal direction in Fig. 8B) is approximately 625 $\mu$m (micrometer). The coupling coefficient of $k = 0.10495$, cf. the coupling matrix M above, yields a desired dielectric permittivity of the resonators res1, res2, res3 to be $\varepsilon_{r3} = 363$. Note that the resonators res1, res2, res3 may each have a structure 1300 as depicted by Fig. 1. According to an embodiment, in view of this, the ratio of the conductor versus dielectric layer thicknesses is chosen to be 16.2 for the resonators res1, res2, res3. Since the length of any dielectric resonator res1, res2, res3 should be 180° (corresponding to a half wavelength) at the frequency of operation, the thickness of the composite stack 1300 (cf. Fig. 1) forming these resonators res1, res2, res3 (Fig. 8B) is about 130 $\mu$m respectively. To achieve desired input and output coupling coefficients, kin and kout, effected by the admittance transformers it1, it4', the dielectric permittivity of the coupling layers implementing these admittance transformers it1, it4' is chosen to be $\varepsilon_{r2} = 4.6$. According to some embodiments, this can be achieved by mild interleaving of glass and conductor substrates. As an example for such mild interleaving, in many cases, the dielectric permittivity of the coupling layers implementing the admittance transformers it1, it4' needs to be increased only by a small amount, which can e.g. be achieved by using a structure similar to Fig. 2. However, according to the present example, rather than having a stack comprising of a multitude of interlaced dielectrics and conductors, a few interleaved layers may be sufficient to increase the dielectric permittivity, i.e. glass/conductor/glass/conductor/glass, where - according to an example - the thickness of the glass layer may be much higher than that of the conductor. The thickness of the complete filter 100b is about 2.9 mm (millimeter), and a further possible physical implementation 100c is shown in perspective in Fig. 9, wherein the coupling layers 110, 120 of Fig. 9 correspond with the admittance transformers it1, it4' of Fig. 8B, wherein the further coupling layers 134a, 134b correspond with the admittance transformers it2', it3' of Fig. 8B, and wherein the resonator layers 130, 132a, 132b correspond with the resonators res1, res2, res3 of Fig. 8B.

According to further embodiments, a ceramic substrate with a lower value of the dielectric constant can also be used for the realisation of a filter in accordance with the above explained principle. However, this may require the values of the effective dielectric permittivities and their respective thicknesses to be recalculated or adapted, respectively.

The filter according to the embodiments, e.g. the embodiment 100c of Fig. 9, once fabricated (or in the course of manufacturing), can e.g. be mounted on a window (preferably on the outside (and/or on the inside)). Here attention may need to be paid to the characteristics of the window glass on which the filter 100b is mounted to. However, with the appropriate knowledge of the glass characteristics of the window glass, the filter 100b can be designed to take that into account, i.e. by adapting the permittivity of an outer coupling layer 110 or 120 to the properties of the window glass.

Of course, the principle according to the embodiments is not limited to providing 3-pole filters - the order can be increased to suit a particular application using conventional filter design wisdom, whereby advantageously optically transparent RF filters are obtained.

While the principle according to the embodiments is particularly well-suited for materials for RF signals in the mm-wave range, other RF ranges (lower and/or higher frequencies) are also possible.

While the principle according to the embodiments is particularly well-suited for optical transparency in the visible wavelength range (for the human eye), other wavelength ranges (e.g., infrared (IR) range) are also possible by choosing appropriate materials for the layers 110, 120, 130 (Fig. 1).

As already mentioned above, according to further embodiments, in addition to a single resonator layer 130 as depicted by the filter embodiment 100 of Fig. 3, n many further resonator layers 132a, 132b may be provided, cf. the filter 100b of Fig. 9, wherein n is a positive integer, wherein adjacent to each of said further resonator layers 132a, 132b an associated further coupling layer 134a, 134b is provided.

According to a preferred embodiment, at least one of said first coupling layer 110 and said second coupling layer 120 comprises glass. If further coupling layers are provided, they (or at least one of them) may also comprise glass.

According to a preferred embodiment, a dielectric permittivity $\varepsilon\_res$ of at least one resonator layer 130 (Fig. 3) is chosen depending on the equation $\varepsilon\_res = \varepsilon\_it / K^2$, wherein $\varepsilon\_it$ is a dielectric permittivity of a coupling layer 120 adjacent to said resonator layer 130, and wherein K is a coupling coefficient.

Further embodiments feature a structure, particularly building or vehicle, comprising at least one filter according to the embodiments. In this respect, Fig. 10 exemplarily depicts a land vehicle (car) 1000, wherein a filter 100 (for details of the filter 100 cf. Fig. 3) is applied to an outer surface of a windscreen 1002 of the car 1000. This way, the windscreen 1002 (together with the filter 100) operates as an optically transparent RF filter, whereby RF data transmissions (with an RF frequency selectivity as defined by the filter 100) from a surrounding area into the car 1000 are enabled. Similar configurations for RF transmissions from inside to the area surrounding the car 1000 are alternatively or additionally also possible, i.e. by providing a (further) filter on an inner surface of the windscreen 1002.

According to some embodiments, the windshield may also be made from laminated safety glass, which may have one or more integrated polymer foils. As an example, these polymer foils may also be used as a dielectric medium for applying the principle according to the embodiments.

Figure 11 schematically depicts a simplified flow-chart of a method of manufacturing a composite substrate 1300 (Fig. 1) according to an embodiment. The method comprises: providing 200 a first layer 1310 of dielectric material, providing 210 a second layer 1320 of dielectric material, and providing 220 at least one conductor layer 1330 of an electrically conductive material between said first layer 1310 and said second layer 1320, wherein said first layer 1310 and said second layer 1320 and said conductor layer 1330 each comprise optically transparent material. Note that the sequence can be changed for other embodiments, i.e. "building up" a stack in the sequence of the layers 1320, 1330, 1310 or the like.

The principle according to the embodiments enables to create optically transparent windows and screens e.g. for buildings, vehicles and aircraft which may be configured to also be highly "transparent" (or transmissive, respectively) to specific desired RF bands, while blocking other undesired bands. Such RF substrates and filters according to the embodiments may also be applied to existing (preferably transparent) structures to extend their functionality regarding the RF signal filter aspect.

The principle according to the embodiments may also be used for embedded waveguide and/or antenna structures.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. Composite substrate (1300; CS) for radio frequency, RF, signals comprising at least a first layer (1310; 1310a) of dielectric material and a second layer (1320; 1320a) of dielectric material, and at least one conductor layer (1330; 1330a) of an electrically conductive material arranged between said first layer (1310; 1310a) and said second layer (1320; 1320a), wherein said first layer (1310; 1310a) and said second layer (1320; 1320a) and said conductor layer (1330; 1330a) each comprise optically transparent material.

2. Composite substrate (1300; CS) according to claim 1, wherein said at least one conductor layer (1330; 1330a) comprises indium tin oxide.

3. Composite substrate (1300; CS) according to at least one of the preceding claims, wherein said first layer (1310; 1310a) of dielectric material and/or said second layer (1320; 1320a) of dielectric material comprises a ceramic material.

4. Composite substrate (1300; CS) according to at least one of the preceding claims, wherein a ratio of an aggregated layer thickness of said first layer (1310; 1310a) and said second layer (1320; 1320a) with respect to a thickness of said conductor layer (1330; 1330a) ranges from about 1:10 to about 1:100, wherein said ratio is preferably about 1:50.

5. Composite substrate (1300; CS) according to at least one of the preceding claims, wherein a layer thickness of said first layer (1310; 1310a) and/or said second layer (1320; 1320a) is in a range between about 1 nm to about 200 nm.

6. Composite substrate (1300; CS) according to at least one of the preceding claims, wherein a layer thickness of said conductor layer (1330; 1330a) is in a range between about 200 nm to about 4000 nm, preferably between about 800 nm to about 1200 nm.

7. Filter (100; 100a; 100b; 100c) for radio frequency, RF, signals (RFi), comprising a first coupling layer (110), a second coupling layer (120), and at least one resonator layer (130) arranged between said first coupling layer (110) and said second coupling layer (120), wherein said resonator layer (130) comprises at least one composite substrate (1300) according to at least one of the preceding claims, wherein said first coupling layer (110) and said second coupling layer (120) each comprise optically transparent material.

8.  Filter (100; 100a; 100b; 100c) according to claim 7, wherein n many further resonator layers (132a, 132b) are provided, wherein n is a positive integer, wherein adjacent to each of said further resonator layers (132a, 132b) an associated further coupling layer (134a, 134b) is provided.

9.  Filter (100; 100a; 100b; 100c) according to at least one of the preceding claims 7 to 8, wherein said optically transparent material of said first coupling layer (110) and said second coupling layer (120) is substantially transparent for a visible wavelength range, wherein particularly said visible wavelength range extends between about 390 nm and about 700 nm.

10. Filter (100; 100a; 100b; 100c) according to at least one of the preceding claims 7 to 9, wherein at least one of said first coupling layer (110) and said second coupling layer (120) comprises glass.

11. Filter (100; 100a; 100b; 100c) according to at least one of the preceding claims 7 to 10, wherein said filter is a bandpass filter, wherein preferably a center frequency of said bandpass filter is about 60.5 GHz, and wherein further preferably a bandwidth of said filter is about 7 GHz.

12. Filter (100; 100a; 100b; 100c) according to at least one of the preceding claims 7 to 11, wherein at least one of said first coupling layer (110) and said second coupling layer (120) is configured as a quarter-wavelength transformer for said RF signals (RFi).

13. Filter (100; 100a; 100b; 100c) according to at least one of the preceding claims 7 to 12, wherein a dielectric permittivity $\varepsilon\_res$ of said at least one resonator layer (130) is chosen depending on the equation $\varepsilon\_res = \varepsilon\_it / K^2$, wherein $\varepsilon\_it$ is a dielectric permittivity of a coupling layer (120) adjacent to said resonator layer (130), and wherein K is a coupling coefficient.

14. Structure, particularly building or vehicle (1000), comprising at least one filter according to at least one of the preceding claims 7 to 13.

15. Method of manufacturing a composite substrate (1300; CS) for radio frequency, RF, signals, wherein said method comprises the following steps: providing (200) a first layer (1310; 1310a) of dielectric material, providing (210) a second layer (1320; 1320a) of dielectric material, and providing (220) at least one conductor layer (1330; 1330a) of an electrically conductive material between said first layer (1310; 1310a) and said second layer (1320; 1320a), wherein said first layer (1310; 1310a) and said second layer (1320; 1320a) and said conductor layer (1330; 1330a) each comprise optically transparent material.

## Fig. 1

1300

1310

1330

h2

1320

z

## Fig. 2

CS

CS'

| 1310a | $\bar{\epsilon}_1$, $h_1$ |
| 1330a | $\sigma_2$, $\mu_2$, $h_2$ |
| 1320a | $\bar{\epsilon}_1$, $h_1$ |

$=$

| 130a |
| $\bar{\epsilon}_{eff}$, $2h_1 + h_2$ |

## Fig. 3

100

OSi

RFi

110
130
120

OSi'

RFi'

z

**Fig. 4**

**Fig. 5**

**Fig. 6**

**Fig. 7**

**Fig. 8A**

**Fig. 8B**

**Fig. 9**

100c

110

130

132a

134a

134b

132b

120

z

**Fig. 10**

1000

1002

100

**Fig. 11**

200

210

220

Europäisches
Patentamt

European
Patent Office

Office européen
des brevets

# EUROPEAN SEARCH REPORT

Application Number

EP 17 18 3403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCALORA M ET AL: "Laminated photonic band structures with high conductivity and high transparency", MICROWAVE SYMPOSIUM DIGEST, 1999 IEEE MTT-S INTERNATIONAL ANAHEIM, CA, USA 13-19 JUNE 1999, PISCATAWAY, NJ, USA,IEEE, US, 13 June 1999 (1999-06-13), pages 893-896vol.3, XP032387998, DOI: 10.1109/MWSYM.1999.779530 ISBN: 978-0-7803-5135-6 | 1,3,5, 7-12,14, 15 | INV. H01Q15/00 ADD. H01P1/201 |
| A | * page 894 - page 895; figures 1-3 * ----- | 4,6,13 | |
| X | US 6 262 830 B1 (SCALORA MICHAEL [US]) 17 July 2001 (2001-07-17) | 1,3,5, 7-11,14, 15 | |
| A | * column 5, line 1 - column 12, line 50; figures 1,6,8 * ----- | 4,6,12, 13 | |
| X | TSAKONAS C ET AL: "Optically transparent frequency selective window for microwave applications", ELECTRONICS LET, IEE STEVENAGE, GB, vol. 37, no. 24, 22 November 2001 (2001-11-22), pages 1464-1466, XP006017560, ISSN: 0013-5194, DOI: 10.1049/EL:20010979 | 1,2, 6-11,14, 15 | |
| A | * Sections: Introduction and Frabrication; figures 1-3 * ----- | 3-5,12, 13 | |
| X | CN 1 425 555 A (ZHANG HUIQIN [CN]) 25 June 2003 (2003-06-25) | 1,3-10, 14,15 | |
| A | * paragraphs [0005], [0010]; figures 1,2 * ----- | 2,11-13 | |

TECHNICAL FIELDS
SEARCHED (IPC)

H01Q
H01P

The present search report has been drawn up for all claims

| Place of search | Date of completion of the search | Examiner |
|---|---|---|
| The Hague | 22 January 2018 | Sípal, Vít |

EPO FORM 1503 03.82 (P04C01)

**ANNEX TO THE EUROPEAN SEARCH REPORT
ON EUROPEAN PATENT APPLICATION NO.**

EP 17 18 3403

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2018

| Patent document cited in search report | | Publication date | Patent family member(s) | | Publication date |
|---|---|---|---|---|---|
| US 6262830 | B1 | 17-07-2001 | CA | 2304019 A1 | 01-04-1999 |
| | | | EP | 1015917 A2 | 05-07-2000 |
| | | | US | 6262830 B1 | 17-07-2001 |
| | | | WO | 9915922 A2 | 01-04-1999 |
| CN 1425555 | A | 25-06-2003 | NONE | | |

EPO FORM P0459

For more details about this annex : see Official Journal of the European Patent Office, No. 12/82